# EUROPÄISCHE PATENTANMELDUNG

(11) **EP 4 597 062 A1**
(43) Veröffentlichungstag der Anmeldung: **06.08.2025**
(21) Anmeldenummer: 25156056.1
(22) Anmeldetag: 05.02.2025
(51) Int. Cl.: G01M 3/26, G01M 3/32, B29C 70/44, B29C 70/54

(54) **VERFAHREN UND VORRICHTUNG ZUM DETEKTIEREN EINER LECKAGE AN EINEM VAKUUMAUFBAU**

(30) Priorität: 05.02.2024 DE 102024103091
(71) Anmelder: Deutsches Zentrum für Luft- und Raumfahrt e.V., 53227 Bonn-Oberkassel (DE)
(72) Erfinder: Grohmann, Yannis, 20249 Hamburg (DE); Haschenburger, Anja, 21682 Stade (DE)
(74) Vertreter: Gramm, Lins & Partner Patent- und Rechtsanwälte PartGmbB

(57) **Zusammenfassung**

Die Erfindung betrifft ein Verfahren zum Detektieren einer Leckage an einem Vakuumaufbau, der mittels einer Vakuumpumpe evakuierbar ist, wobei das Verfahren die folgenden Schritte umfasst:
- Erhöhen des Umgebungsdrucks mindestens in einem Teilbereich des Vakuumaufbaus mittels einer Druckerhöhungseinrichtung,
- Erfassen einer Durchflussinformation beim Evakuieren des Vakuumaufbaus mittels eines zwischen dem Vakuumaufbau und der Vakuumpumpe angeordneten Durchflusssensors bei dem erhöhtem Umgebungsdruck, und
- Erkennen einer Leckage an dem Vakuumaufbau in Abhängigkeit von der erfassten Durchflussinformation mittels einer elektronischen Auswerteeinheit.

## Beschreibung

Die Erfindung betrifft ein Verfahren zum Detektieren einer Leckage an einem Vakuumaufbau, der mittels einer Vakuumpumpe evakuierbar ist. Die Erfindung betrifft ebenso eine Vorrichtung hierzu. Die Erfindung betrifft außerdem ein Verfahren zur Herstellung eines Faserverbundbauteils aus einem Faserverbundwerkstoff.

Aufgrund der gewichtsspezifischen Festigkeit und Steifigkeit von Faserverbundbauteilen, die aus Faserverbundwerkstoffen hergestellt werden, sind derartige Bauteile aus der Luft- und Raumfahrt sowie aus der Automobilebereich heutzutage kaum mehr wegzudenken. Bei der Herstellung eines Faserverbundbauteils wird dabei ein in ein Fasermaterial infundiertes Matrixmaterial meist unter Temperatur- und Druckbeaufschlagung ausgehärtet bzw. konsolidiert und bildet so nach dem Aushärten eine integrale Einheit mit dem Fasermaterial. Die Verstärkungsfasern des Fasermaterials werden hierdurch in die vorgegebene Richtung gezwungen und können die auftretenden Lasten in die vorgegebene Richtung abtragen.

Faserverbundwerkstoffe, aus denen derartige Faserverbundbauteile hergestellt werden, weisen in der Regel zwei Hauptbestandteile auf, nämlich zum einen ein Fasermaterial und zum anderen ein Matrixmaterial. Hierneben können noch weitere sekundäre Bestandteile verwendet werden, wie beispielsweise Bindermaterialien oder zusätzliche Funktionselemente, die in das Bauteil integriert werden sollen.

Neben trockenen Fasermaterialien, die in einem anschließenden Infusionsprozess mit dem Matrixmaterial infundiert werden müssen, werden auch bereits vorimprägnierte Fasermaterialien (sogenannte Prepregs) verwendet, bei denen das Fasermaterial mit dem Matrixmaterial bereits vorimprägniert ist. Ein anschließender Infusionsprozess ist dann in der Regel nicht mehr notwendig. Vor dem Aushärten des Matrixmaterials wird in der Regel das Fasermaterial in ein Formwerkzeug eingebracht, dass mit seiner formgebenden Werkzeugoberfläche die spätere Bauteileilform nachbildet.

Bei der Verwendung von trockenem Fasermaterial wird zur Infusion des Matrixmaterials in das Fasermaterial oftmals ein Vakuuminfusionsverfahren genutzt, bei dem das Fasermaterial meist auf einem Formwerkzeug abgelegt und mittels eines Vakuumaufbaus vakuumdicht verschlossen wird. Anschließend wird das vakuumdicht abgeschlossene Fasermaterial evakuiert, so dass aufgrund des Druckgradienten zwischen Fasermaterial und äußerer Umgebung das Matrixmaterial in das Fasermaterial infundiert. Anschließend kann das Matrixmaterial beispielsweise in einem Autoklaven ausgehärtet und so das Bauteil hergestellt werden.

Aber auch bei der Herstellung von Faserverbundbauteilen mittels Prepregs wird ein Vakuumaufbau relevant, da für die Autoklavaushärtung ebenfalls ein vakuumdichter Aufbau notwendig ist, um eine gleichmäßige Druckübertragung auf das Bauteil zu erreichen und eine hohe Oberflächenqualität des Bauteils zu gewährleisten.

Ein derartiger Vakuumaufbau besteht dabei in der Regel aus einer Vakuumabdeckung, beispielsweise einer Vakuumfolie oder einer Vakuumhaube, die meist mit Hilfe entsprechender Klebemittel (Siegelkit) mit dem Formwerkzeug verklebt und luftdicht abgeschlossen wird.

Kommt es während des Prozesses dabei zu einer Leckage an dem Vakuumaufbau, so ist mit einer starken Beeinträchtigung der Bauteilqualität oder gar dem Ausschluss des Bauteils zu rechnen. Eine solche Beschädigung hat dabei hohe Kosten und eine Verzögerung des Arbeitsablaufes zur Folge.

Aus der Praxis sind dabei Verfahren zur Leckage-Erkennung bekannt, bei denen beispielsweise mittels einer Unterdruckmessung auf eine Leckage geschlossen wird. Verändert sich nach Einstellung des Vakuums die angelegte Druckdifferenz, so muss mit einer Undichtigkeit gerechnet werden. Auch das Absuchen des Aufbaus mit Hilfe eines akustischen Leckagegerätes ist bekannt.

Die Verfahren haben jedoch den Nachteil, dass sie für Großbauteile, wie beispielsweise Rotorblätter für Windkraftanlagen oder Flügelschalen für Flugzeuge, gänzlich ungeeignet sind, da sie entweder nur feststellen, ob eine Leckage vorliegt, jedoch nicht, wo diese sich befindet oder weil deren Einsatz schlicht zu langwierig ist und den Prozessablauf nur unnötigerweise verlängert. Außerdem kann bei sehr kleinen Leckagen die entstehende Druckdifferenz nicht ausreichend sein, um sicher auf eine Leckage schließen zu können. Denn durch das nachströmende Matrixmaterial können sich die Unterdruckverhältnisse innerhalb des Vakuumaufbaus verändern, sodass eine gewisse Unterdruckschwankung zu akzeptieren ist.

Aus der DE 10 2011 100 096 B4 ist beispielsweise ein Verfahren zum Erkennen einer Leckage an einem vakuumabgedichteten Aufbau bekannt, bei dem mit Hilfe eines thermografischen Bildsensors eine Temperaturdifferenz an einem vakuumabgedichteten Aufbau ermittelt und dann eine Leckage erkannt wird, da die aufgrund der Leckage in das Fasermaterial einströmende Umgebungsluft eine Temperaturdifferenz innerhalb des Vakuumaufbaus erzeugt.

Aus der DE 10 2017 120 272 B4 ist ein Verfahren zum Detektieren einer Leckage an einem Vakuumaufbau bekannt, bei dem ein zweistufiger Detektionsprozess durchgeführt wird. Im ersten Schritt wird dabei ein Wert-Zeit-Verlauf eines Parameters wie Schall, Kraft oder Durchfluss an verschiedenen Sensorpositionen erstellt und diese Verläufe miteinander verglichen. Legt der Vergleich nahe, dass eine Leckage an dem Vakuumaufbau existiert, so wird basierend auf dem Vergleich der Parameterverläufe ein Leckagebereich identifiziert, der dann in einem zweiten Schritt durch andere Detektionsverfahren näher untersucht wird.

Es ist Aufgabe er vorliegenden Erfindung ein verbessertes Verfahren sowie Vorrichtung anzugeben, mit dem prozesssicher eine Leckage an einem Vakuumaufbau identifiziert werden kann.

Die Aufgabe wird mit dem Verfahren zu Leckageerkennung gemäß Anspruch 1 erfindungsgemäß gelöst. Vorteilhafte Ausgestaltungen finden sich dann in den entsprechenden Unteransprüchen.

Gemäß Anspruch 1 wird ein Verfahren zum Detektieren einer Leckage an einem Vakuumaufbau, der mittels einer Vakuumpumpe evakuierbar ist, wobei das Verfahren die folgenden Schritte umfasst:
- Erhöhen des Umgebungsdrucks mindestens in einem Teilbereich des Vakuumaufbaus mittels einer Druckerhöhungseinrichtung,
- Erfassen einer Durchflussinformation beim Evakuieren des Vakuumaufbaus mittels eines zwischen dem Vakuumaufbau und der Vakuumpumpe angeordneten Durchflusssensors bei dem erhöhtem Umgebungsdruck, und
- Erkennen einer Leckage an dem Vakuumaufbau in Abhängigkeit von der erfassten Durchflussinformation mittels einer elektronischen Auswerteeinheit.

Es ist erfindungsgemäß somit vorgesehen, dass zumindest in einem Teilbereich des Vakuumaufbaus der Umgebungsdruck erhöht wird. Vorzugsweise ist dabei vorgesehen, dass nicht um den gesamten Vakuumaufbau herum der Umgebungsdruck erhöht wird, sondern nur partiell in bestimmten Bereichen, sodass in den übrigen, ausgeschlossenen Bereichen der Umgebungsdruck nicht erhöht ist und so beispielsweise normalen Atmosphärendruck hat. Nun dem Teilbereich wird dabei der Umgebungsdruck erhöht. Dabei kann ebenfalls vorgesehen sein, dass der Umgebungsdruck nur im Teilbereich oberhalb des Vakuumaufbaus erhöht wird und nicht systemübergreifend.

Während der Evakuierung des Vakuumaufbaus und der Erhöhung des Umgebungsdruckes in dem jeweiligen Teilbereich wird darüber hinaus vorzugsweise kontinuierlich eine Durchflussinformation erfasst, die mittels eines Durchflusssensors ermittelt wird. Dieser Durchflusssensor ist dabei zwischen dem Vakuumaufbau und der Vakuumpumpe angeordnet. In Abhängigkeit von der erfassten Durchflussinformation wird dann mithilfe einer elektronischen Auswerteeinheit, der die Durchflussinformation kontinuierlich bereitgestellt bekommt, eine Leckage an dem Vakuumaufbau erkannt.

Dies kann beispielsweise zum einen dadurch geschehen, dass die erfasste Durchflussinformation kontinuierlich mit einem Referenzwert verglichen wird, wobei bei Abweichung der Durchflussinformation von dem Referenzwert auf eine Leckage geschlossen wird. Es ist darüber hinaus auch denkbar, dass bei einer Veränderung der Durchflussinformation, die bei einem Vakuumaufbau ohne Leckage im Wesentlichen unverändert sein sollte, auf eine Leckage geschlossen wird.

Es hat sich gezeigt, dass durch die Erhöhung des Umgebungsdruckes im Bereich einer Leckage ein erhöhter Durchfluss durch die Leckage in das Innere des Vakuumaufbaus auch bei sehr kleinen Öffnungen erreicht wird, was wiederum durch eine Veränderung des Durchflusses detektiert durch den Durchflusssensor ermittelbar ist. Somit kann in Verbindung mit der Erhöhung des Umgebungsdruckes in zumindest Teilbereichen des Vakuumaufbaus i.V.m. einem Durchflusssensor prozesssicher auf das Vorliegen einer Leckage am Vakuumaufbau erkannt werden.

Gemäß einer Ausführungsform ist vorgesehen, dass eine erste Durchflussinformation beim Evakuieren des Vakuumaufbaus mittels des Durchflusssensors bei einem ersten Umgebungsdruck in dem mindestens einen Teilbereich erfasst wird und anschließend dann eine zweite Durchflussinformation beim Evakuieren des Vakuumaufbaus mittels des Durchflusssensors bei einem gegenüber dem ersten Umgebungsdruck erhöhten zweiten Umgebungsdruck erfasst wird, wobei eine Leckage an dem Vakuumaufbau in Abhängigkeit von einem Vergleich der ersten Durchflussinformation und der zweiten Durchflussinformation erkannt wird.

Dabei werden mindestens zwei Werte für die Durchflussinformation ermittelt, nämlich einmal bei einem ersten Umgebungsdruck und dann bei einem erhöhten zweiten Umgebungsdruck. Weichen diese beiden Werte innerhalb eines Toleranzbereiches voneinander ab, so muss auf das Vorhandensein einer Leckage geschlossen werden. Denn durch die Erhöhung des Umgebungsdruckes bei der zweiten Durchflussmessung wird mehr gasförmiges Fluid durch die Leckage eingesaugt und von der Vakuumpumpe abgesaugt, was durch eine Erhöhung des Durchflusses durch den Durchflusssensor erkannt werden kann.

Dabei vorteilhafterweise vorgesehen, dass der erste Umgebungsdruck dem Atmosphärendruck entspricht, sodass nur für den zweiten Umgebungsdruck eine entsprechende Manipulation des Umgebungsdruckes notwendig wird.

Gemäß einer Ausführungsform ist vorgesehen, dass die Durchflussinformation eine Durchflussmenge des evakuierten Fluids pro Zeiteinheit enthält.

Gemäß einer Ausführungsform ist vorgesehen, dass eine Überdruckeinrichtung, die einen Hohlraum aufweist und an einer Seite zur Kontaktierung mit dem Vakuumaufbau offen ist, zumindest in dem Teilbereich mit der offen Seite auf den Vakuumaufbau aufgesetzt wird, sodass sich eine geschlossene Kavität in dem Hohlraum ausbildet, wobei mittels eines mit der Kavität in Wirkverbindung stehenden Kompressors ein Überdruck in der Kavität erzeugt wird, um einen erhöhten Umgebungsdruck in dem Teilbereich zu bewirken.

Die Überdruckeinrichtung ist eine Art Gefäß mit einer offenen Seite bzw. Seitenfläche, mit der die Überdruckeinrichtung auf den Vakuumaufbau aufgesetzt wird. Die offene Seite der Überdruckeinrichtung wird dann durch die Oberfläche des Vakuumaufbaus geschlossen, sodass sich eine zur allen Seiten im Wesentlichen geschlossene Kavität bildet. Diese Kavität steht in Wirkverbindung mit einem Kompressor, sodass ein gasförmiges Fluid in die Kavität hineingedrückt wird, umso ein Überdruck in der Kavität zu erzeugen.

Befindet sich nun im Vakuumaufbau an genau der Stelle eine Leckage, an der die Überdruckeinrichtung mit der offenen Seite auf den Vakuumaufbau aufgesetzt wurde, so wird das gasförmige Fluid, welches durch den Kompressor in die Kavität gedrückt wird, in das Innere des Vakuumaufbaus gedrückt und gleichzeitig durch die Vakuumpumpe angesaugt, wodurch der Durchfluss durch den Durchflusssensor erhöht wird. Dies wird detektiert und dann auf eine entsprechende Leckage im Bereich der Überdruckeinrichtung erkannt.

Die Überdruckeinrichtung ist dabei vergleichbar mit einer Luftkissen-Überdruck-Vorrichtung und ähnelt einem Luftkissen Fahrzeug. Im Randbereich der offenen Seite der Überdruckeinrichtung ist dabei eine Gummilippe oder Dichtlippe vorgesehen, um ein Entweichen des Überdrucks in der Überdruckeinrichtung im Randbereich zwischen der Überdruckeinrichtung und dem Vakuumaufbau zu verhindern oder zumindest weitestgehend zu reduzieren. Die Dichtlippe kann dabei in Art einer sich bei Überdruck nach außen wölbenden Gummidichtung ausgebildet sein.

Gemäß einer Ausführungsform ist vorgesehen, dass die Überdruckeinrichtung auf dem Vakuumaufbau verfahren wird, wobei eine Leckage in Abhängigkeit von einer Veränderung der kontinuierlich erfassten Durchflussinformation während des Verfahrens der Überdruckeinrichtung erkannt wird.

Durch die Ausbildung eines Luftkissens bei Einstellung eines Überdrucks in der Überdruckeinrichtung kann diese auf der Oberfläche des Vakuumaufbaus weitestgehend frei von mechanische Reibung bewegt werden. Dabei wird kontinuierlich eine Durchflussinformation erfasst, wobei bei einer signifikanten Veränderung des Durchflusses dann auf eine Leckage geschlossen wird.

Ein weiterer Aspekt der vorliegenden Erfindung ist ein Verfahren zur Herstellung eines Faserverbundbauteils aus einem Faserverbundwerkstoff aufweisend ein Fasermaterial und ein Matrixmaterial, wobei das Verfahren die folgenden Schritte umfasst:
- Erstellen eines Vakuumaufbau, indem das Fasermaterial in eine evakuierbare Kavität eingebracht und gegenüber der Umgebung luftdicht abgedichtet wird, und
- Durchführen des Verfahrens zur Leckageerkennung wie vorstehend beschrieben, wenn der Vakuumaufbau evakuiert wird.

Das Erstellen des Vakuumaufbaus erfolgt dabei gattungsgemäß durch die wesentlichen Schritte des Einbringens eines Fasermaterials in ein Formwerkzeug und anschließendes Erstellen des Vakuumaufbaus, indem eine Vakuumfolie oder Vakuumhaube über das Fasermaterial drapiert und gegenüber dem Formwerkzeug luftdicht abgedichtet wird. An einer Stelle des Vakuumaufbaus wird dann die unter dem Vakuumaufbau gebildete Kavität mit einer Vakuumpumpe zwecks evakuiert Evakuierung verbunden.

Ein weiterer Aspekt der vorliegenden Erfindung ist einer Vorrichtung zum Detektieren einer Leckage an einem Vakuumaufbau, der mittels einer Vakuumpumpe evakuierbar ist, mit
- einer Druckerhöhungseinrichtung, die zum Erhöhen des Umgebungsdrucks mindestens in einem Teilbereich des Vakuumaufbaus eingerichtet ist,
- zumindest einem Durchflusssensor, der zwischen dem Vakuumaufbau und der Vakuumpumpe angeordnet und zum Erfassen einer Durchflussinformation beim Evakuieren des Vakuumaufbaus eingerichtet ist, und
- einer elektronischen Auswerteeinheit, die eingerichtet ist, eine Leckage an dem Vakuumaufbau in Abhängigkeit von der erfassten Durchflussinformation zu erkennen.

Gemäß einer Ausführungsform ist vorgesehen, dass die Auswerteeinheit eingerichtet ist, eine Leckage an dem Vakuumaufbau in Abhängigkeit von einer Veränderung der kontinuierlich erfassten Durchflussinformation zu erkennen.

Gemäß einer Ausführungsform ist vorgesehen, dass die Durchflussinformation eine Durchflussmenge des evakuierten Fluids pro Zeiteinheit enthält.

Gemäß einer Ausführungsform ist vorgesehen, dass die Druckerhöhungseinrichtung eine Überdruckeinrichtung umfasst, die einen Hohlraum aufweist und an einer Seite zur Kontaktierung mit dem Vakuumaufbau offen ist, sodass sich eine geschlossene Kavität in dem Hohlraum ausbildet, wenn die Überdruckeinrichtung mit der offenen Seite zumindest in dem Teilbereich auf den Vakuumaufbau aufgesetzt wird, wobei mittels eines mit der Kavität in Wirkverbindung stehenden Kompressors ein Überdruck in der Kavität erzeugbar ist, um einen erhöhten Umgebungsdruck in dem Teilbereich zu bewirken.

Gemäß einer Ausführungsform ist vorgesehen, dass an einem Randabschnitt der offenen Seite der Überdruckeinrichtung eine Gummilippe vorgesehen ist, um die Überdruckeinrichtung bei erzeugtem Überdruck in der Kavität über den Vakuumaufbau verfahren zu können.

Die Erfindung wird anhand der beigefügten Figur beispielhaft näher erläutert. Es zeigt:

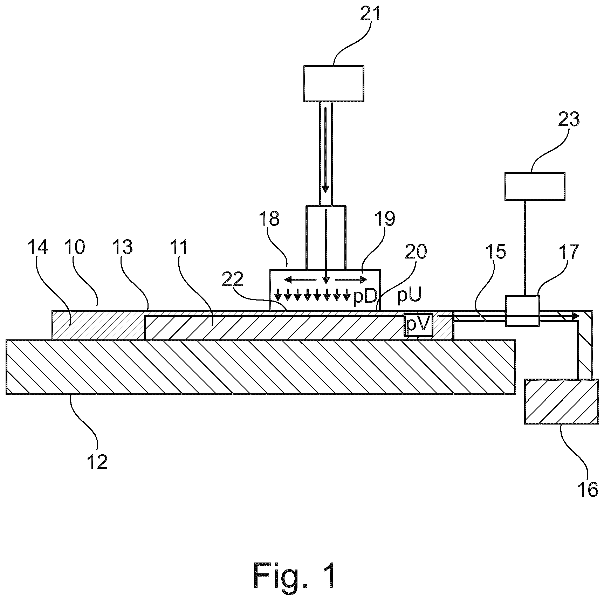

Figur 1 schematische Darstellung eines Vakuumaufbaus mit Vorrichtung zur Leckageerkennung.
Für 1 zeigt ein Vakuumaufbau 10, mit dem ein Faserverbundbauteil aus einem Faserverbundwerkstoff aufweisend ein Fasermaterial und ein das Fasermaterial einbettendes Matrixmaterial hergestellt werden soll. Zur Herstellung des Vakuumaufbaus 10 wird ein Fasermaterial 11 auf ein Formwerkzeug 12 drapiert und unter einer Vakuumfolie 13 luftdicht verschlossen. Hierdurch bildet sich unter der Vakuumfolie 13 eine Bauteilkavität 14, in der sich das vorzugsweise trockene Fasermaterial 11 zur Herstellung des Faserverbundbauteils befindet.

Der so erstellte Vakuumaufbau 10 wird über eine Rohrleitung bzw. Schlauchleitung 15 mit einer Vakuumpumpe 16 verbunden, sodass die sich in der Bauteilkavität 14 befindliche Luft (oder ein anderes gasförmiges Fluid) über die Rohrleitung 15 von der Vakuumpumpe 16 abgesaugt und so die Bauteilkavität 14 evakuiert werden kann.

In der Rohrleitung 15 zwischen dem Vakuumaufbau 10 und der Vakuumpumpe 16 befindet sich ein Durchflusssensor 17, der beim Evakuieren der Bauteilkavität 14 den Durchfluss der abgesaugten Luft bzw. des gasförmigen Fluids misst. Ist das gewünschte Vakuum in der Bauteilkavität 14 eingestellt, so tendiert der Durchfluss, der von dem Durchflusssensor 17 gemessen wird, im Regelfall gegen 0, sofern keine Leckage an den Vakuumaufbau 10 vorhanden ist.

Eine solche Leckage ist in der Regel eine Beschädigung der Vakuumfolie 13, sodass hier eine Öffnung der Bauteilkavität 14 zur Umgebung entsteht, wodurch beim Evakuieren der Bauteilkavität 14 Luft eingesaugt wird und meint Infundieren des Matrixmaterials gegebenenfalls eine vollständige Infusion nicht gewährleistet werden kann.

Erfindungsgemäß wird nun eine Überdruckeinrichtung 18 verwendet, die einen Hohlraum 19 und eine offene Seite 20 aufweist. Die Überdruckeinrichtung 18 wird dabei mit der offenen Seite 20 auf die äußere Oberfläche der Vakuumfolie 13 aufgesetzt, sodass der Hohlraum 19 eine im Wesentlichen geschlossene Kavität bildet.

Die Überdruckeinrichtung 18 ist darüber hinaus mit einem Kompressor 21 verbunden, sodass Druckluft in den Hohlraum 19 der Überdruckeinrichtung 18 hineingedrückt werden kann. Hierdurch entsteht eine Erhöhung des Umgebungsdruckes im Bereich der Vakuumfolie 13, die von der Überdruckeinrichtung 18 abgedeckt ist. Im Hohlraum 19 bildet sich dabei ein Überdruck pD aus, der größer ist als der umgebende Atmosphärendruck pU. Der Druck pV innerhalb der Bauteilkavität 14 ist dabei am geringsten, sodass folgender Zusammenhang gilt: pD > pU > pV

Befindet sich nun in dem Teilbereich 22 der Vakuumfolie 13, der von der offenen Seite 20 der Überdruckeinrichtung 18 abgedeckt wird, eine Leckage, so wird aufgrund des erhöhten Umgebungsdruckes pD in den Hohlraum 19 der Überdruckeinrichtung 18 gegenüber dem umgebenden Atmosphärendruck PU vermehrt Luft in die Bauteilkavität 14 durch die Vakuumpumpe 16 eingesaugt, wodurch der Durchfluss, der an dem Durchflusssensor 17 detektiert werden kann, steigt.

Diese Veränderung des gemessenen Durchflusses am Durchflusssensor 17 kann nun von einer Auswerteeinheit 23 detektiert werden, sodass in diesem Fall auf das Vorhandensein einer Leckage im Teilbereich 22 geschlossen werden kann. Ohne Veränderung des gemessenen Durchflusses kann davon ausgegangen werden, dass trotz der Erhöhung des Umgebungsdruckes im Bereich des Teilbereiches 22 die Vakuumfolie 13 keine Leckage aufweist.

Durch Bewegen der Überdruckeinrichtung 18 auf der Vakuumfolie 13 kann nun der gesamte Vakuumaufbau 10 untersucht werden.

### Bezugszeichenliste

- 10: Vakuumaufbau
- 11: Fasermaterial
- 12: Formwerkzeug
- 13: Vakuumfolie
- 14: Bauteilkavität
- 15: Rohrleitung
- 16: Vakuumpumpe
- 17: Durchflusssensor
- 18: Überdruckeinrichtung
- 19: Hohlraum
- 20: offene Seite
- 21: Kompressor
- 22: Teilbereich
- 23: Auswerteeinheit

## Patentansprüche

1. Verfahren zum Detektieren einer Leckage an einem Vakuumaufbau (10), der mittels einer Vakuumpumpe (16) evakuierbar ist, wobei das Verfahren die folgenden Schritte umfasst:
- Erhöhen des Umgebungsdrucks mindestens in einem Teilbereich (22) des Vakuumaufbaus (10) mittels einer Druckerhöhungseinrichtung,
- Erfassen einer Durchflussinformation beim Evakuieren des Vakuumaufbaus (10) mittels eines zwischen dem Vakuumaufbau (10) und der Vakuumpumpe (16) angeordneten Durchflusssensors (17) bei dem erhöhtem Umgebungsdruck, und
- Erkennen einer Leckage an dem Vakuumaufbau (10) in Abhängigkeit von der erfassten Durchflussinformation mittels einer elektronischen Auswerteeinheit (23).

2. Verfahren nach Anspruch 1, **dadurch gekennzeichnet, dass** eine erste Durchflussinformation beim Evakuieren des Vakuumaufbaus (10) mittels des Durchflusssensors (17) bei einem ersten Umgebungsdruck in dem mindestens einen Teilbereich (22) erfasst wird und anschließend dann eine zweite Durchflussinformation beim Evakuieren des Vakuumaufbaus (10) mittels des Durchflusssensors (17) bei einem gegenüber dem ersten Umgebungsdruck erhöhten zweiten Umgebungsdruck erfasst wird, wobei eine Leckage an dem Vakuumaufbau (10) in Abhängigkeit von einem Vergleich der ersten Durchflussinformation und der zweiten Durchflussinformation erkannt wird.

3. Verfahren nach Anspruch 2, **dadurch gekennzeichnet, dass** der erste Umgebungsdruck dem Atmosphärendruck entspricht.

4. Verfahren nach einem der vorhergehenden Ansprüche, **dadurch gekennzeichnet, dass** die Durchflussinformation eine Durchflussmenge des evakuierten Fluids pro Zeiteinheit enthält.

5. Verfahren nach einem der vorhergehenden Ansprüche, **dadurch gekennzeichnet, dass** eine Überdruckeinrichtung (18), die einen Hohlraum (19) aufweist und an einer Seite (20) zur Kontaktierung mit dem Vakuumaufbau (10) offen ist, zumindest in dem Teilbereich (22) mit der offenen Seite (20) auf den Vakuumaufbau (10) aufgesetzt wird, sodass sich eine geschlossene Kavität in dem Hohlraum (19) ausbildet, wobei mittels eines mit der Kavität in Wirkverbindung stehenden Kompressors (21) ein Überdruck in der Kavität erzeugt wird, um einen erhöhten Umgebungsdruck in dem Teilbereich (22) zu bewirken.

6. Verfahren nach Anspruch 5, **dadurch gekennzeichnet, dass** die Überdruckeinrichtung (18) auf dem Vakuumaufbau (10) verfahren wird, wobei eine Leckage in Abhängigkeit von einer Veränderung der kontinuierlich erfassten Durchflussinformation während des Verfahrens der Überdruckeinrichtung (18) erkannt wird.

7. Verfahren zur Herstellung eines Faserverbundbauteils aus einem Faserverbundwerkstoff aufweisend ein Fasermaterial (11) und ein Matrixmaterial, wobei das Verfahren die folgenden Schritte umfasst:
- Erstellen eines Vakuumaufbau (10), indem das Fasermaterial (11) in eine evakuierbare Kavität eingebracht und gegenüber der Umgebung luftdicht abgedichtet wird, und
- Durchführen des Verfahrens nach einem der vorhergehenden Ansprüche, wenn der Vakuumaufbau (10) evakuiert wird.

8. Vorrichtung zum Detektieren einer Leckage an einem Vakuumaufbau (10), der mittels einer Vakuumpumpe (16) evakuierbar ist, mit
- einer Druckerhöhungseinrichtung, die zum Erhöhen des Umgebungsdrucks mindestens in einem Teilbereich (22) des Vakuumaufbaus (10) eingerichtet ist,
- zumindest einem Durchflusssensor (17), der zwischen dem Vakuumaufbau (10) und der Vakuumpumpe (16) angeordnet und zum Erfassen einer Durchflussinformation beim Evakuieren des Vakuumaufbaus (10) eingerichtet ist, und
- einer elektronischen Auswerteeinheit (23), die eingerichtet ist, eine Leckage an dem Vakuumaufbau (10) in Abhängigkeit von der erfassten Durchflussinformation zu erkennen.

9. Vorrichtung nach Anspruch 8, **dadurch gekennzeichnet, dass** die Auswerteeinheit (23) eingerichtet ist, eine Leckage an dem Vakuumaufbau (10) in Abhängigkeit von einer Veränderung der kontinuierlich erfassten Durchflussinformation zu erkennen.

10. Vorrichtung nach Anspruch 8 oder 9, **dadurch gekennzeichnet, dass** die Durchflussinformation eine Durchflussmenge des evakuierten Fluids pro Zeiteinheit enthält.

11. Vorrichtung nach einem der Ansprüche 8 bis 10, **dadurch gekennzeichnet, dass** die Druckerhöhungseinrichtung eine Überdruckeinrichtung (18) umfasst, die einen Hohlraum (19) aufweist und an einer Seite (20) zur Kontaktierung mit dem Vakuumaufbau (10) offen ist, sodass sich eine geschlossene Kavität in dem Hohlraum (19) ausbildet, wenn die Überdruckeinrichtung (18) mit der offenen Seite (20) zumindest in dem Teilbereich (22) auf den Vakuumaufbau (10) aufgesetzt wird, wobei mittels eines mit der Kavität in Wirkverbindung stehenden Kompressors (21) ein Überdruck in der Kavität erzeugbar ist, um einen erhöhten Umgebungsdruck in dem Teilbereich (22) zu bewirken.

12. Vorrichtung nach Anspruch 11, **dadurch gekennzeichnet, dass** an einem Randabschnitt der offenen Seite (20) der Überdruckeinrichtung (18) eine Gummilippe vorgesehen ist, um die Überdruckeinrichtung (18) bei erzeugtem Überdruck in der Kavität über den Vakuumaufbau (10) verfahren zu können.
